# EUROPÄISCHE PATENTSCHRIFT

(11) **EP 2 756 982 B1**
(45) Veröffentlichungstag und Bekanntmachung des Hinweises auf die Patenterteilung: **13.11.2019**
(21) Anmeldenummer: 13194061.1
(22) Anmeldetag: 22.11.2013
(51) Int. Cl.: B60L 53/30

(54) **Verfahren und System zum Austauschen von Ladeinformationen zwischen einer Ladestation und einem Kassensystem**
Method and system for exchanging charging information between a charging station and a check out system
Procédé et système d'échange d'informations de charge entre une station de charge et un système de caisse

(30) Priorität: 22.01.2013 DE 102013000981
(43) Veröffentlichungstag der Anmeldung: 23.07.2014
(73) Patentinhaber: innogy SE, 45128 Essen (DE)
(72) Erfinder: Vogel, Gerald, 50997 Köln (DE)
(74) Vertreter: Cohausz & Florack

(56) Entgegenhaltungen:
- EP-A1- 2 380 150
- EP-A1- 2 445 745
- DE-A1-102009 030 091
- DE-A1-102010 032 580
- US-A1- 2011 226 848
- US-A1- 2011 316 482
- US-A1- 2012 169 282
- Anonymous: "Handshaking - Wikipedia", , 28 October 2012 (2012-10-28), XP055568454, Retrieved from the Internet: URL:https://en.wikipedia.org/w/index.php?t itle=Handshaking&oldid=520220345 [retrieved on 2019-03-13]
- Anonymous: "Filling station - Wikipedia", , 11 January 2013 (2013-01-11), XP055569950, Retrieved from the Internet: URL:https://en.wikipedia.org/w/index.php?t itle=Filling_station&oldid=532588158 [retrieved on 2019-03-15]
- Lad-E.Com: "Abrechnungsverfahren - LAD-E Elektrotankstellen für alle elektrobetriebenen Fahrzeuge", , 23 December 2012 (2012-12-23), XP055569956, Retrieved from the Internet: URL:https://www.lad-e.com/allgemeine-infor mation/abrechnungsverfahren/ [retrieved on 2019-03-15]
- Ryan Young: "Gasoline Pump Control System Software Requirements Specification", , 1 October 2002 (2002-10-01), XP055571034, Retrieved from the Internet: URL:http://people.cs.ksu.edu/~oyenan/MyWeb /Case/Final%20SRS.doc [retrieved on 2019-03-19]
- Tatsuno: "Combined dispensers Liquid Fuel & LPG series SHARK BMP2000.S", , 15 February 2000 (2000-02-15), XP055571051, Retrieved from the Internet: URL:http://www.tatsuno-europe.com/files/ck editor/ke%20stazeni-en/instal_shark_PHM_LP G/|IN022-EN__Complete_manual.pdf [retrieved on 2019-03-19]

## Beschreibung

Der Gegenstand betrifft ein Verfahren als auch ein System zum Austauschen von Ladeinformationen zwischen einer Ladestation für Elektrofahrzeuge und einem Kassensystem.

Elektrofahrzeuge und andere mobile Verbraucher elektrischer Energie benötigen eine Ladeinfrastruktur zum Beziehen elektrischer Energie. Hierfür sind Ladestationen, auch Ladeeinrichtungen genannt, vorgesehen, an denen diese die elektrische Energie beziehen können.

Die bezogene elektrische Energie muss jedoch auch gegenüber dem Energielieferanten abgerechnet werden. Hierzu steht eine Vielzahl von Konzepten zur Verfügung, die Bezahlen der elektrischen Energie ermöglichen. Unter anderem kann dies durch unmittelbares Bezahlen an der Ladestation erfolgen, wie aus dem Stand der Technik bekannt. Auch ist es bekannt, mittels Informationsaustauschs zwischen dem Elektrofahrzeug und der Ladestation einen nachgelagerten Zahlungsprozess anzustoßen, in dem der Benutzer des Elektrofahrzeugs eine Kundenidentifikation preis gibt, mit deren Hilfe der Energieversorger bezogene Energie nachträglich in Rechnung stellen kann. Hierzu sind jedoch Vertragsbeziehungen zwischen dem Energieversorger beziehungsweise dem Betreiber der Ladestation und dem Nutzer notwendig. Ein anonymes Beziehen elektrischer Energie ist damit nicht möglich.

Bei heutigen Tankstellen für flüssige Kraftstoffe sind die Zapfsäulen mit Kassen- und Warenwirtschaftssystemen unmittelbar verbunden. Hierzu sind proprietäre Schnittstellen zwischen den Zapfsäulen und den Kassensystemen definiert. Die bestehenden Kassensysteme verfügen darüber hinaus über Schnittstellen für externe Dienstleister, um Rechnungsdaten von externen Quellen in die Kassensysteme einspeisen zu können.

Es wäre wünschenswert, die bestehende Infrastruktur von Kassen- und Warenwirtschaftssystemen an herkömmlichen Tankstellen nutzbar zu machen, um Ladeinfrastruktur für Elektromobilität zur Verfügung zu stellen.

Problematisch hierbei ist jedoch, dass aufgrund der Vielzahl unterschiedlicher Kassen- und Warenwirtschaftssysteme eine einheitliche Anbindung einer Ladestation unmöglich ist. Andererseits ist es notwendig, für die verschiedenen im Bereich der Elektromobilität denkbaren Preismodelle, beispielsweise zeitbasiertes Laden, insbesondere bei DC Ladung oder energiebasiertes Laden, insbesondere bei AC Ladung, notwendige Sicherheitsmerkmale, wie Freischaltung einer Ladestation, Sperrung der Ladestation usw. zur Verfügung zu stellen. Hierzu ist aber eine bidirektionale Kommunikation zwischen der Ladestation und dem Kassensystem notwendig.

Somit ergibt sich die Aufgabe, eine Ladestation in besonders komfortabler und flexibler Art und Weise an ein Kassensystem bei Wahrung der Manipulationssicherheit anzubinden. Diese Aufgabe wird gegenständlich durch ein Verfahren nach Anspruch 1 als auch ein System nach Anspruch 13 gelöst.

Mit Hilfe des gegenständlichen Verfahrens ist es möglich, die Ladeinfrastruktur, insbesondere eine Ladestation, an bestehende Kassensysteme anzubinden. Dadurch wird es ermöglicht, über die bestehenden Kassensysteme Elektromobilitätsdienste, wie das Laden von Elektrofahrzeugen, abzurechnen. Durch das Vorsehen eines Freigabesignals, welches von dem Kassensystem abgesetzt wird, kann eine Manipulationssicherheit gegenüber unberechtigtem Beziehen von elektrischer Energie sicher gestellt werden.

Die gegenständliche Kommunikation erfolgt durch den Austausch der relevanten Informationen über eine Zentrale, an die sowohl das Kassensystem als auch die Ladestation angeschlossen sind. Hier können unterschiedlichste Kommunikationsstrecken verwendet werden, wie beispielsweise mobile Datendienste oder andere funkbasierte oder drahtgebundene Weitverkehrsnetze. Insbesondere ist es möglich, die Ladestation mit der Zentrale über eine Mobilfunkdatenverbindung oder ein Weitverkehrsnetz oder eine Kombination aus drahtloser und drahtgebundener Übertragung zu verbinden. Eine solche Verbindung ist auch zwischen der Zentrale und dem Kassensystem möglich, wobei auf Seiten des Kassensystems eine proprietäre Schnittstelle unterstützt werden muss.

Hierzu kann in der Zentrale, abhängig vom angeschlossenen Kassensystem, eine Protokollumsetzung dahingehend stattfinden, dass die von der Zentrale an das Kassensystem übertragenen Informationen als auch die vom Kassensystem in der Zentrale empfangenen Informationen in das beziehungsweise aus dem jeweiligen proprietären Protokoll des Kassensystem übersetzt werden.

Zunächst wird vorgeschlagen, dass ein Energiemengenzählermesswert in einer Zentrale empfangen wird. Der Energiemengenzählermesswert kann beispielsweise der Messwert eines Stromzählers sein. Insbesondere umfasst der Energiemengenzählermesswert eine Information zu einer an einer Ladestation bei einem Ladevorgang bezogenen Energiemenge. Diese Information wird während eines Ladevorgangs durch den in der Ladestation angeordneten Energiemengenzähler erfasst und anschließend über Kommunikationsmittel der Ladestation an eine Zentrale übertragen.

Insbesondere kann der Energiemengenzählermesswert ein absoluter Zählwert sein, der sich inkrementell während eines Bezugs von Energie erhöht. Auch kann ein Energiemengenzählermesswert ein Differenzwert sein, der aus dem Zählerstand zu Beginn einer Ladung und dem Zählerstand zu dem Zeitpunkt, zu dem der Energiemengenzählermesswert übertragen werden soll, insbesondere zum Ende einer Ladung, gebildet ist. Dieser Differenzwert ist ein Maß für die bezogene Energie zwischen dem Beginn einer Ladung und Zeitpunkt vor dem Übertragen des Energiemengenzählermesswertes.

Der Energiemengenzählermesswert wird vorzugsweise über ein eine Kommunikationseinrichtung der Ladestation an die Zentrale übermittelt. Hierbei können die oben genannten Übertragungsstrecken genutzt werden.

In der Zentrale wird der Energiemengenzählermesswert ausgewertet. Hierbei kann beispielsweise bereits ermittelt werden, wie hoch ein in Rechnung zu stellender Betrag sein kann. Hierzu kann in der Zentrale ein Preismodell hinterlegt werden, welches bestimmten Energieeinheiten, beispielsweise einer Kilowattstunde, einen bestimmten Preis zuordnet. Abhängig von dem Energiemengenzählermesswert kann ein zu zahlender Betrag errechnet werden.

Auch kann in der Zentrale eine Protokollumsetzung der Informationen, insbesondere des Energiemengenzählermesswertes erfolgen dahingehend, dass die von der Zentrale an das Kassensystem übertragenen Informationen in das Protokoll umformatiert sind, welche das jeweilige Kassensystem bzw. dessen Schnittstelle unterstützt. Anschließend übermittelt die Zentrale zumindest den Energiemengenzählermesswert an das Kassensystem.

In dem Kassensystem erfolgt die Übernahme von Abrechnungsdaten, insbesondere des Energiemengenzählermesswertes. Zusätzlich zum Energiemengenzählermesswert kann beispielsweise auch eine Preisinformation, eine Ladezeit, eine Ladedauer, eine Ladestations ID oder andere Daten die dem Laden zuzuordnen sind, enthalten sein. Nach erfolgreicher Übernahme der Daten in das Kassensystem kann eine Abrechnung der bezogenen Energie in dem Kassensystem erfolgen. Diese Abrechnung obliegt nach der Übernahme der Daten von der Zentrale dem Kassensystem alleine.

Das Kassensystem kann jedoch eine erfolgte Übernahme der Daten bestätigen und ein Freigabesignal unmittelbar nach dem Übernehmen der Daten von der Zentrale oder auch erst nach einem erfolgreichen Zahlungsvorgang an die Zentrale übermitteln. In der Zentrale kann das Freigabesignal, welches in dem Protokoll des Kassensystems formatiert ist, empfangen werden. In der Zentrale kann das Freigabesignal in ein Protokoll der Ladestation umgesetzt werden. Anschließend übermittelt die Zentrale das Freigabesignal an die Ladestation, so dass ein anschließendes Laden an der Ladestation wieder ermöglicht ist.

Vorzugsweise ist die Ladestation zwischen zwei Ladevorgängen oder auch außerhalb der Öffnungszeiten einer Verkaufsstelle gesperrt, d. h. dass keine elektrische Energie bezogen werden kann. Eine gesperrte Ladestation muss freigegeben werden. Dies erfolgt regelmäßig nach der Übernahme zumindest des Energiemengenzählermesswertes durch das Kassensystem, indem das Kassensystem das Freigabesignal absetzt. Beim Empfang des Freigabesignals in der Ladestation wird diese für ein Laden eines Elektrofahrzeugs befähigt.

Nach dem Ladevorgang möchte der Nutzer sicher stellen, dass er auch nur die von ihm bezogene Energie bzw. die Dauer des Ladens, insbesondere bei DC Laden, bezahlt. Dies setzt voraus, dass die Ladestation nach dem Abschluss eines Ladevorgangs gesperrt wird. Ein Sperren wird gemäß einem Ausführungsbeispiel dadurch ermöglicht, dass nach dem Abschluss eines Ladevorgangs, insbesondere wenn das Elektrofahrzeug über ein Ladekabel eine Beendigung des Ladevorgangs angezeigt hat, die Ladestation sich selbst sperrt. In diesem Fall kann gemäß einem Ausführungsbeispiel neben dem Energiemengenzählermesswert eine Ladestromsperrinformation von der Ladestation in der Zentrale empfangen werden.

Der Energiemengenzählermesswert kann dann derjenige Wert sein, der zum Ende des Ladevorgangs erfasst wurde. Gleichzeitig mit dem Ende des Ladevorgangs sperrt die Ladestation sich selbst, so dass eine Ladestromsperrinformation generiert werden kann, welche ebenfalls an die Zentrale weitergeleitet werden kann.

Auch ist es möglich, dass das Sperren des Ladestroms extern erfolgt. Beispielsweise kann durch das Kassensystem von einem Bedienpersonal eine Ladestation gesperrt werden. Dies kann insbesondere dann erfolgen, wenn ein Ladevorgang beendet wurde und der Kunde bedeutet, dass er die bezogene Energie bezahlen möchte. In diesem Fall wird vorgeschlagen, dass vor dem Empfangen des Energiemengenzählermesswertes ein Ladestromsperrsignal von dem Kassensystem in der Zentrale empfangen wird und dass das Ladestromsperrsignal von der Zentrale an die Ladestation übermittelt wird.

Der Kunde kann anzeigen, dass er das Laden beenden möchte. In diesem Fall setzt das Kassensystem das Ladestromsperrsignal, ausgelöst durch einen Benutzer, ab. Das Ladestromsperrsignal wird an die Ladestation übermittelt und die Ladestation wird gesperrt. Im Anschluss daran kann der Energiemengenzählermesswert erfasst werden und an das Kassensystem übertragen werden. Dies stellt ebenfalls sicher, dass nur die Energiemenge erfasst wird, die vom Nutzer bis zum Ende des Ladevorgangs bezogen wurde.

Um Plausibilitätskontrollen des Ladevorgangs durchzuführen und beispielsweise den Ladevorgang zu überwachen, wird vorgeschlagen, dass der Energiemengenzählermesswert in Abständen während eines laufenden Ladevorgangs von der Ladestation in der Zentrale empfangen wird. Der empfangene Energiemengenzählermesswert kann von der Zentrale auch an das Kassensystem übertragen werden. Während eines laufenden Ladevorgangs kann regelmäßig oder in Abständen ein Energiemengenzählermesswert übertragen werden.

Beim Übertragen des Energiemengenzählermesswertes können weitere Informationen sowohl von der Ladestation über die Zentrale an das Kassensystem als auch vom Kassensystem über die Zentrale an die Ladestation übertragen werden. Gemäß einem Ausführungsbeispiel wird vorgeschlagen, dass zusammen mit dem Energiemengenzählermesswert Informationen zu zumindest einem Status der Ladestation, einer Identifikation der Ladestation, einer Identifikation des Energiemengenzählers, Ladezeiten, Verbindungszeiten, und/oder einer Signatur, insbesondere eine Signatur zuzüglich Zeitstempel, von der Ladestation in der Zentrale empfangen wird. Insbesondere beim DC Laden kann ein Energiemengenzählermesswert auch eine Zeitangabe sein, da DC Laden in der Regel zeitbasiert ist. Die in der Zentrale empfangenen Daten können zumindest teilweise verarbeitet und/oder unverarbeitet von der Zentrale an das Kassensystem weitergeleitet werden.

Der Status der Ladestation kann beispielsweise ein Status des Energiemengenzählers sein. Dieser Status kann Auskunft darüber geben, ob ein Fehler beim Erfassen der Energie aufgetreten ist. Ein weiterer Status kann beispielsweise auch die Information darüber sein, mit welcher Ladeleistung die Ladestation betrieben wird oder auch, ob die Ladestation AC oder DC Ladung durchführt. Ein weiterer Status kann beispielsweise auch die Information darüber sein, of eine bestimmte Ladestation frei, besetzt und/oder betriebsbereit ist. Statusinformationen erlauben einen Rückschluss auf den aktuellen Zustand der Ladestation.

Eine Identifikation der Ladestation kann eine eindeutige Bezeichnung der Ladestation, beispielsweise eine Zeichenfolge sein, mit der eine jede Ladestation identifiziert werden kann.

Auch der Energiemengenzähler selbst kann mit einer Identifikation versehen sein. Dies kann ebenfalls eine Zeichenfolge sein. Der Energiemengenzähler ist der abrechnungstechnisch relevante Teil der Ladestation und es muss sichergestellt werden, dass die Daten des Energiemengenzählers, insbesondere der Energiemengenzählermesswert, der in dem Kassensystem empfangen wird, von einem bestimmten Energiemengenzähler stammt. Dieser Energiemengenzähler ist in der Regel geeicht und durch das Versehen des Energiemengenzählermesswertes mit der Identifikation des Energiemengenzählers kann zumindest eine eichrechtliche Bedingung erfüllt werden.

Auch die Dauer und die Uhrzeit des Ladevorgangs kann übertragen werden. Hierdurch ist auch ein Abgleich der Uhrzeiten in der Ladestation mit der Uhrzeit in der Zentrale oder der Uhrzeit in dem Kassensystem möglich.

Schließlich kann eine Signatur der übertragenen Daten zusammen mit dem Energiemengenzählermesswert übertragen werden. Mit Hilfe der Signatur können die übertragenen Daten auf Authentizität und/oder Integrität überprüft werden. Ist in den übertragenen Daten die Identifikation der Ladestation und die Identifikation des Energiemengenzählers zusammen mit dem Energiemengenzählermesswert enthalten, so kann sichergestellt werden, dass diese Daten unverfälscht sind und von einer bestimmten Ladestation und einem bestimmten Energiemengenzähler stammen.

Da während des Ladens und insbesondere zum Ende des Ladevorgangs eine Kommunikation zwischen Ladestation und Zentrale notwendig ist, wird vorgeschlagen, dass die Ladestation eine Kommunikationsverbindung mit der Zentrale überwacht. Das Überwachen der Kommunikationsverbindung ist insbesondere dann notwendig, wenn sichergestellt werden muss, dass die bezogene Energiemenge auch abgerechnet werden kann. Bei einer Störung dieser Kommunikationsverbindung kann die Ladestation in einem eingeschränkten Ladebetrieb betrieben werden. Ein eingeschränkter Ladebetrieb kann beispielsweise Laden mit einer geringeren Leistung, einer kürzeren Ladezeit oder auch lediglich die Signalisierung eines Notbetriebs an der Ladeeinrichtung sein. Diese Maßnahmen sind kumulativ möglich. Insbesondere zum Ende des Ladevorgangs muss die Ladestation in der Lage sein, den Energiezählermesswert und gegebenenfalls weitere Informationen an die Zentrale zu übertragen. Ist die Kommunikationsverbindung gestört, wäre eine Abrechnung der bezogenen Energie zu diesem Zeitpunkt nicht möglich. Eine spätere Abrechnung ist dann möglich, wenn die Kommunikationsverbindung wieder hergestellt ist.

Wie zuvor erläutert, ist eine Ladestation in der Regel gesperrt, d. h. Ladeenergie kann nicht zur Verfügung gestellt werden. Nach dem Empfang des Freigabesignals kann der Ladevorgang selbsttätig durch die Ladestation mit einem Elektrofahrzeug ausgehandelt werden. Hierzu wird zunächst eine elektrische Verbindung zwischen dem Fahrzeug und der Ladeeinrichtung hergestellt. Dies kann durch Verbinden der Ladestation mit dem Elektrofahrzeug über ein Ladekabel erfolgen. Das Ladekabel kann aus einer Kabelgarnitur gebildet sein, die neben den Leitungen für die Energieübertragung auch Kommunikationsverbindungen aufweist, insbesondere zum Übertragen eines Pilotsignals nach DIN IEC 61851. Die Korrektheit der Verbindung wird überprüft und primäre Ladeparameter, wie die Bereitschaft zum Empfangen des Ladestroms, können ausgetauscht werden.

Anschließend steuert der Controller der Ladestation als auch der Laderegler in dem Elektrofahrzeug den Ladevorgang. Die Ladestation kann unmittelbar zum Beginn eines Ladevorgangs eine entsprechende Nachricht über den beginnenden Ladevorgang an die Zentrale übermitteln. Die Zentrale kann diese Nachricht an das Kassensystem weiterleiten und dort kann angezeigt werden, dass an einer bestimmten Ladestation ein Ladevorgang stattfindet. Hierzu kann beispielsweise auch die Identifikation der Ladestation übertragen werden, um in dem Kassensystem genau anzuzeigen, welche Ladestation aus einer Vielzahl von Ladestationen derzeit in Betrieb ist. Darüber hinaus kann an der Ladestation eine Anzeige erfolgen, dass ein Ladevorgang gestartet ist.

Während des Ladevorgangs können in Abständen die Informationen, die oben genannt wurden, zwischen Ladestation und Zentrale beziehungsweise Zentrale und Kassensystem ausgetauscht werden.

Nach Beendigung des Ladevorgangs ist, wie zuvor bereits erläutert, die Ladestation entweder über ein Ladestromsperrsignal gesperrt worden oder hat sich selbst gesperrt und hat eine Ladestromsperrinformation an die Zentrale übermittelt. Danach kann kein neuer Ladevorgang initiiert werden, bevor nicht ein Freigabesignal von der Zentrale empfangen wird.

Die Authentizität und Integrität des empfangenen Energiemengenzählermesswertes ist von abrechnungstechnischer Bedeutung. Aus diesem Grunde wird vorgeschlagen, dass in dem Kassensystem zumindest der empfangene Energiemengenzählermesswert unter Verwendung der Identifikation der Ladestation und der Identifikation des Energiemengenzählers auf Authentizität überprüft wird. Durch ein Verknüpfen des Energiemengenzählermesswertes mit der Identifikation der Ladestation und der Identifikation des Energiemengenzählers kann in dem Kassensystem oder der Zentrale festgestellt werden, ob die empfangenen Werte des Energiemengenzählers tatsächlich von dem korrekten Energiemengenzähler aus der korrekten Ladestation stammen.

Durch die Verwendung der Signatur, zumindest des empfangenen Energiemengenzählermesswertes, entweder in der Zentrale oder dem Kassensystem, kann der Energiemengenzählermesswert auf Integrität überprüft werden. D. h., es kann sichergestellt werden, dass der übertragene Wert auf der Übertragungsstrecke nicht verfälscht wurde.

Um einen nachträglichen Nachweis über einen Ladevorgang führen zu können, wird vorgeschlagen, dass in der Zentrale dem Energiemengenzählermesswert eine eindeutige Ladevorgangsidentifikationsnummer zugeordnet wird. Diese eindeutige Ladevorgangsidentifikationsnummer wird nur einmal pro Energiemengenzählmesswert vergeben. Insbesondere können diejenigen Energiemengenzählmesswerte mit der Ladevorgangsidentifikationsnummer versehen werden, die zum Anfang und zum Ende des Ladevorgangs an die Zentrale übermittelt werden und die letztendlich für die Berechnung des Preises relevant sind. Es ist möglich eine Ladevorgangsidentifikationsnummer für beide Werte (Anfangswert und Endwert) zu vergeben, oder eine Ladevorgangsidentifikationsnummer für jeden der beiden Werte.

Diese Ladevorgangsidentifikationsnummer kann zusammen mit dem Energiemengenzählermesswert von der Zentrale an das Kassensystem übertragen werden. In dem Kassensystem kann dann diese Identifikationsnummer zusammen mit dem Energiemengenzählermesswert und dem zu zahlenden Betrag auf einem Beleg ausgedruckt werden. Mit Hilfe der Ladeidentifikationsnummer ist es für einen Nutzer möglich, im nachhinein den Energiemengenzählermesswert samt weiterer Informationen z.B. über die Ladestationsidentifikation, die Energiemengenzähleridentifikation, Ladezeit, Ladeort und dergleichen, insbesondere alle mit dem Energiemengenzählermesswert von der Ladestation an die Zentrale übertragenen Daten abzurufen. Sobald der Nutzer bezahlt erhält er den Zahlungsbeleg auf dem die Ladevorgangsidentifikationsnummer enthalten ist.

Gemäß einem Ausführungsbeispiel wird vorgeschlagen, dass die Zentrale den Energiezählermengenmesswert zusammen mit der Ladevorgangsidentifikationsnummer über ein Weitverkehrsnetz zugänglich macht. Das kann beispielsweise über eine Internetseite erfolgen und ein Nutzer kann über die Internetseite unter Verwendung der Ladevorgangsidentifikationsnummer den Energiemengenzählermesswert auslesen.

Auch ist es möglich, dass eine Weitverkehrsnetzadresse, insbesondere eine Internetadresse, beispielsweise eine URL, mit der Ladevorgangsidentifikationsnummer verknüpft wird. Unter dieser Weitverkehrsnetzadresse kann der Energiemengenzählermesswert als auch die weiteren Daten abrufbar hinterlegt sein. Anschießend kann die Weitverkehrsnetzadresse in einen zweidimensionalen Strichcode codiert werden. Dies kann beispielsweise ein QR Code sein, mit dessen Hilfe komplexere Adressen kodiert werden können. Dieser zweidimensionale Strichcode oder auch die Weitverkehrsnetzadresse selbst kann von der Zentrale zusammen mit dem Energiezählermesswert und der Ladevorgangsidentifikationsnummer an das Kassensystem übertragen werden. Diese Informationen können auf dem Zahlungsbeleg ausgegeben werden.

Bei der Verwendung eines zweidimensionalen Strichcodes kann der Nutzer dann, beispielsweise unter Verwendung seines vorzugweise mobilen Computers, z.B. eines Smartphones, unmittelbar auf die Weitverkehrsnetzadresse zugreifen und den Energiemengenzählermesswert überprüfen.

Die zuvor genannten Verfahren können auch als Computerprogramm oder als auf einem Speichermedium gespeichertes Computerprogramm realisiert werden. Hierbei kann ladestationsseitig, zentralseitig und/oder kassenseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung erläutert. In der Zeichnung zeigen:
- Figur 1: ein System eingerichtet zum Austauschen von Ladeinformationen zwischen einer Ladestation und einem Kassensystem;
- Figur 2: den Ablauf einer Kommunikation zwischen einem Kassensystem, einer Zentrale und einer Ladestation bei selbsttätiger Sperrung der Ladestation;
- Figur 3: den Ablauf einer Kommunikation zwischen Kassensystem, einer Zentrale und einer Ladestation bei ferngesteuerter Sperrung der Ladestation bei Beendigung des Ladevorgangs.

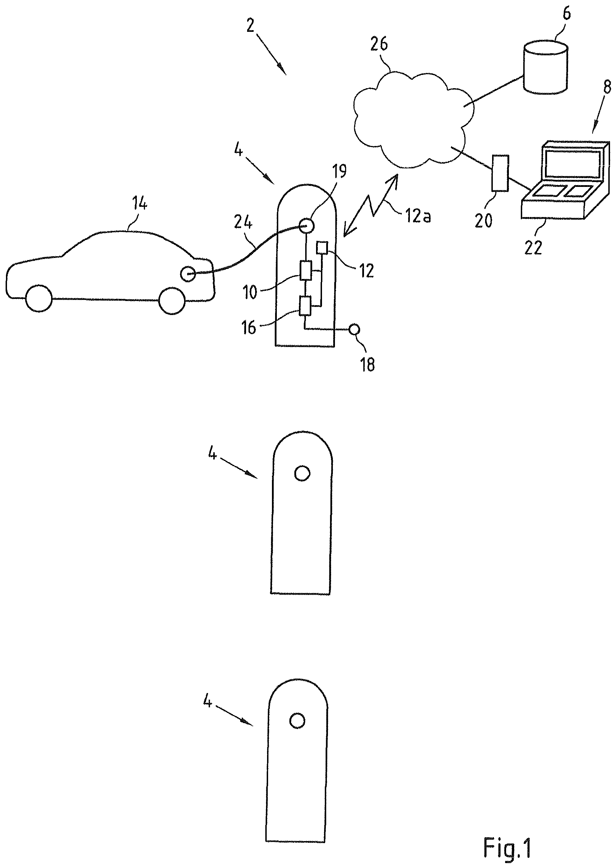

Figur 1 zeigt ein System 2 eingerichtet zum Austauschen von Ladeinformationen zwischen einer Ladestation 4 und einem Kassensystem 8. Hierzu kommuniziert die Ladestation 4 zunächst mit einer Zentrale 6 und die Zentrale 6 leitet Daten an das Kassensystem 8 weiter. Die Ladestation 4 verfügt unter anderem über einen Energiemengenzähler 10 sowie ein Kommunikationsmodul 12. Das Kommunikationsmodul 12 kann beispielsweise über eine Mobilfunkverbindung 12a eine Verbindung mit einem Weitverkehrsnetz, beispielsweise mit dem Internet 26, aufnehmen, worüber eine Kommunikation mit der Zentrale 6 möglich ist.

Die Ladestation 4 verfügt über einen Sperrmechanismus 16, mit dem die Ladestation 4 beziehungsweise das Laden über die Ladestation 4 gesperrt wird. Hierzu kann der Sperrmechanismus 16 eine elektrische Verbindung zwischen einem elektrischen Anschluss 19 für ein Ladekabel 24 und einem elektrischen Anschluss 18 für ein Energieversorgungsnetz unterbrechen.

Das Kassensystem 8 verfügt über eine Schnittstelleneinrichtung 20, mit der eine Kommunikation zwischen einer Registrierkasse 22 und externen Dienstleistern, beispielsweise der Zentrale 6, möglich ist. Das Protokoll der Schnittstelle 20 ist ein properitäres und für jedes Kassensystem 8 unterschiedlich.

Wesentlich für den Betrieb einer Mehrzahl von Ladestationen 4 an einem Kassensystem 8 ist es, dass bestehende Infrastruktur genutzt werden kann. Hierzu wird die Verwendung der Zentrale 6 vorgeschlagen, die die Kommunikation zwischen einer Ladestation 4 und der Registrierkasse 22 des Kassensystems 8 ermöglicht und somit einen Bezahlvorgang für das Bezahlen der bezogenen Energie über die Registrierkasse 22 abgewickelt werden kann.

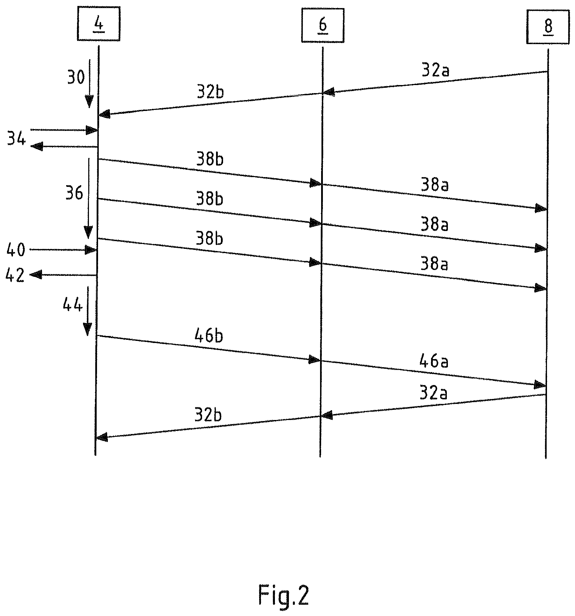

Der Ablauf eines Ladevorgangs ist beispielhaft in Figur 2 dargestellt. Zunächst ist eine Ladestation 4 in einem gesperrten Zustand 30. D. h., dass der Sperrmechanismus 16 die elektrische Verbindung zwischen dem Energieversorgungsanschluss 18 und dem Anschluss 19 trennt. Von dem Kassensystem 8 ausgehend kann ein Freigabesignal 32a über die Schnittstelle 20 und das Weitverkehrsnetz 26 an die Zentrale 6 übertragen werden. In der Zentrale 6 wird das Freigabesignal 32a gegebenenfalls in ein anderes Protokoll umgesetzt. Anschließend wird über die Mobilfunkverbindung 12a das Freigabesignal 32b an die Kommunikationseinrichtung 12 der Ladestation 4 übertragen. Im Anschluss an den Empfang des Freigabesignals 32b wird die elektrische Verbindung zwischen dem Energieversorgungsanschluss 18 und dem Anschluss 19 geschlossen.

Ein Elektrofahrzeug 14 kann zu einer beliebigen Zeit (vorzugsweise zu Betriebszeiten der Ladestation 4) über ein Ladekabel 24 an die Ladestation 4 angeschlossen werden. Über das Ladekabel 24 tauscht das Elektrofahrzeug 14, beziehungsweise der nicht dargestellte Laderegler des Fahrzeugs 14 Ladeparameter mit der Ladestation 4 aus (34). Nach dem Aushandeln (34) der Ladeparameter wird eine Ladebereitschaft des Elektrofahrzeugs 14 in der Ladestation 4 signalisiert und die Ladestation 4 beginnt mit dem Ladevorgang 36.

Zu Beginn des Ladevorgangs (36) wird der Energiemengenzählermesswert des Energiemengenzählers 10 erfasst. Daneben kann ein Datum, eine Uhrzeit und eine Identifikation des Energiemengenzählers 10 erfasst werden. Auch kann eine Identifikation der Ladestation 4 erfasst werden. Alle Informationen werden in einem nicht dargestellten Mikrocomputer in einem Datenpaket gesammelt und gegebenenfalls mit wird das Datenpaket anschließend mit einer Signatur versehen. Die Daten werden gesammelt, vorzugsweise als Datenpaket, als Ladeinformation 38b an die Zentrale 6 über die Mobilfunkverbindung 12a und das Weitverkehrsnetz 26 übertragen. In der Zentrale 6 erfolgt eine Protokollumsetzung derart, dass die Ladeinformation 38b für die Schnittstelle 20 geeignet aufbereitet wird um von dem Kassensystem 8 beziehungsweise der Registrierkasse 22 verarbeitet zu werden.

Die aufbereitete Ladeinformation 38a wird von der Zentrale 6 an das Kassensystem 8 übertragen. Diese Übertragung kann während des Ladevorgangs (36) mehrfach erfolgen. Am Ende eines Ladevorgangs 36 kann das Elektrofahrzeug 14 der Ladestation 4 gegenüber die Beendigung des Ladevorgangs anzeigen (40). Die Beendigung des Ladevorgangs wird von der Ladestation 4 gegenüber dem Fahrzeug 14 bestätigt (42). Anschließend wird in der Ladestation 4 der Sperrmechanismus 16 aktiviert und die Ladestation wird gesperrt (44).

Sobald die Ladestation 4 gesperrt wurde, wird der Energiemengenzählermesswert erfasst. Außerdem kann ein Differenzwert aus dem Ende des Ladevorgangs (36) erfassten Energiemengenzählermesswertes und dem zu Beginn eines Ladevorgangs (36) erfassten Energiemengenzählermesswertes bestimmt werden. Dieser Wert ist ein Maß für die tatsächlich bezogene Energie. Zusammen mit weiteren Informationen, die z.B. oben bereits genannt wurden, kann die Ladeinformation 46b an die Zentrale 6 übertragen werden.

In der Zentrale erfolgt eine Umsetzung der Ladeinformation 46b in das Protokoll der Schnittstelle 20. Die umgesetzte Ladeinformation 46a wird von der Zentrale 6 an das Kassensystem 8 übertragen.

Unmittelbar bei Übernahme der Ladeinformation 46a kann das Kassensystem 8 ein Freigabesignal 32a an die Zentrale 6 und von dort, ggf. nach erforderlicher Protokollumsetzung, als Freigabesignal 32b an die Leitstation 4 übertragen werden. Die Ladestation 4 wird im Anschluss daran wieder freigegeben und ein Laden ist erneut möglich.

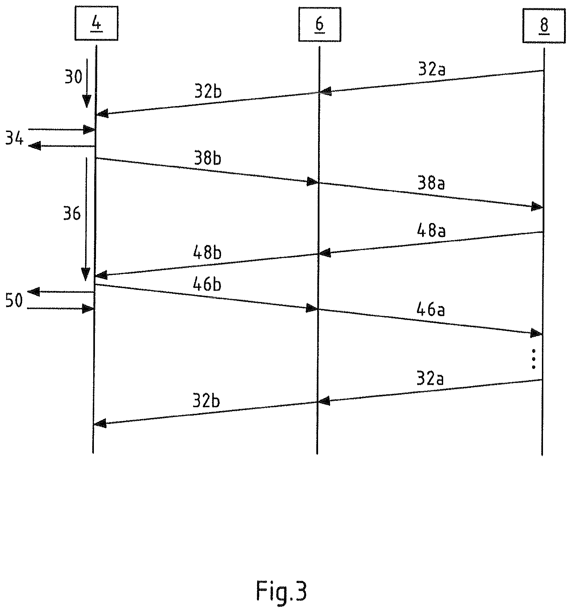

Figur 3 zeigt einen zu Figur 2 ähnlichen Ablauf. Bis zum Schritt 38 ist der Ablauf identisch zu dem in Figur 2.

Anders als in der Figur 2 wird dort nicht in Abständen die Ladeinformation 38b von der Ladestation 4 an das Kassensystem 8 übertragen. Wie in der Figur 3 gezeigt, kann von dem Kassensystem aus ein Ladestromsperrsignal 48a abgesetzt werden. Dies kann beispielsweise dann erfolgen, wenn der Kunde gegenüber dem Bedienpersonal angezeigt hat, dass er einen Ladevorgang beenden möchte oder wenn eine bestimmte Ladezeit abgelaufen ist. Das Ladestromsperrsignal 48a wird in der Zentrale 6 umgesetzt und als Ladestromsperrsignal 48b an die Ladestation 4 übertragen.

Im Anschluss an den Empfang des Ladestromsperrsignals 48b sperrt die Ladestation 4 über den Sperrmechanismus 16 die Verbindung zwischen dem Anschluss 18 und dem Anschluss 19. Die Beendigung des Ladevorgangs wird gegenüber dem Elektrofahrzeug 14 angezeigt (50) und das Elektrofahrzeug 14 bestätig diese Beendigung. Parallel dazu kann unmittelbar im Anschluss an den Empfang des Ladestromsperrsignals 48b die Information umfassend zumindest den Energiemengenzählermesswert erfasst werden und die Ladeinformation 46b bzw. 46a über die Zentrale 6 an das Kassensystem 8 übertragen werden.

Ein Freigabesignal 32a kann in dem in Figur 3 gezeigtem Beispiel auch zu einem späteren Zeitpunkt, beispielsweise wenn ein Zahlvorgang vollständig abgeschlossen ist, von dem Kassensystem 8 über die Zentrale 6 an die Ladestation 4 übertragen werden. Erst dann ist die Ladestation 4 wieder zum Laden befähigt.

## Patentansprüche

1. Verfahren zum Austauschen von Ladeinformationen zwischen einer Ladestation (4) und einem Kassensystem (8) umfassend:
- Freigeben eines Ladevorgangs nach dem Empfang eines Freigabesignals in der Ladestation (4),
- Durchführen eines Ladevorgangs an der Ladestation (4),
- Sperren der Ladestation (4) nach Abschluss des Ladevorgangs und vor einem Übermitteln eines Energiemengenzählermesswertes umfassend eine Information zu einer an der Ladestation (4) bei dem Ladevorgang bezogenen Energiemenge von der Ladestation (4) an eine Zentrale (6),
Empfangen des Energiemengenzählermesswertes von der Ladestation (4) in der Zentrale (6),
anschließendes Übermitteln zumindest des Energiemengenzählermesswertes von der Zentrale (6) an ein Kassensystem (8), wobei
nach dem Übermitteln des Energiemengenzählermesswertes ein Freigabesignal zur Freigabe eines Ladestroms in der Ladestation (4) von dem Kassensystem (8) in der Zentrale (6) empfangen wird, und
anschließend zumindest das Freigabesignal von der Zentrale (6) an die Ladestation (4) übermittelt wird.

2. Verfahren nach Anspruch 1, **dadurch gekennzeichnet, dass** neben dem Energiemengenzählermesswert eine Information, dass die Ladestation ihren Ladestrom sperrt, von der Ladestation (4) in der Zentrale (6) empfangen wird.

3. Verfahren nach Anspruch 1 oder 2, **dadurch gekennzeichnet, dass** vor dem Empfangen des Energiemengenzählermesswertes ein Ladestromsperrsignal von dem Kassensystem (8) in der Zentrale (6) empfangen wird und dass das Ladestromsperrsignal von der Zentrale (6) an die Ladestation (4) übermittelt wird.

4. Verfahren nach einem der vorangehenden Ansprüche, **dadurch gekennzeichnet, dass** der Energiemengenzählermesswert in Abständen während eines laufenden Ladevorgangs von der Ladestation (4) in der Zentrale (6) empfangen wird und dass der empfangende Energiemengenzählermesswert von der Zentrale (6) an das Kassensystem (8) übertragen wird.

5. Verfahren nach einem der vorangehenden Ansprüche, **dadurch gekennzeichnet, dass** zusammen mit dem Energiemengenzählermesswert Informationen zu
- einem Status der Ladestation (4),
- eine Identifikation der Ladestation (4),
- eine Identifikation des Energiemengenzählers, Ladezeiten,
- Verbindungszeiten, und/oder
- einer Signatur
von der Ladestation (4) in der Zentrale (6) empfangen wird.

6. Verfahren nach einem der vorangehenden Ansprüche, **dadurch gekennzeichnet, dass** die Ladestation (4) eine Kommunikationsverbindung mit der Zentrale (6) überwacht und dass die Ladestation (4) bei einer Störung der Kommunikationsverbindung einen Ladebetrieb mit eingeschränktem Umfang ermöglicht.

7. Verfahren nach einem der vorangehenden Ansprüche, **dadurch gekennzeichnet, dass** die Ladestation (4) nach dem Empfang des Freigabesignals einen Ladevorgang selbsttätig mit einem Elektrofahrzeug (14) aushandelt.

8. Verfahren nach einem der Ansprüche 5 bis 7, **dadurch gekennzeichnet, dass** in dem Kassensystem (8) zumindest der empfangene Energiemengenzählermesswert unter Verwendung der Identifikation der Ladestation (4) und der Identifikation des Energiemengenzählers auf Authentizität überprüft wird und/oder dass in dem Kassensystem (8) zumindest der empfangene Energiemengenzählermesswert unter Verwendung der Signatur auf Integrität überprüft wird.

9. Verfahren nach einem der Ansprüche 5 bis 8, **dadurch gekennzeichnet, dass** in der Zentrale (6) zumindest der empfangene Energiemengenzählermesswert unter Verwendung der Identifikation der Ladestation (4) und der Identifikation des Energiemengenzählers auf Authentizität überprüft wird und/oder dass in der Zentrale (6) zumindest der empfangene Energiemengenzählermesswert unter Verwendung der Signatur auf Integrität überprüft wird.

10. Verfahren nach einem der vorangehenden Ansprüche, **dadurch gekennzeichnet, dass** in der Zentrale (6) dem Energiemengenzählermesswert eine eindeutige Ladevorgangsidentifikationsnummer zugeordnet wird und dass die Ladevorgangsidentifikationsnummer zusammen mit dem Energiemengenzählermesswert von der Zentrale )6) an das Kassensystem übertragen wird.

11. Verfahren nach Anspruch 10, **dadurch gekennzeichnet, dass** die Zentrale (6) den Energiemengenzählermesswert zusammen mit der Ladevorgangsidentifikationsnummer über ein Weitverkehrsnetz zugänglich macht.

12. Verfahren nach einem der Ansprüche 10 oder 11, **dadurch gekennzeichnet, dass** die Zentrale (6) die Ladevorgangsidentifikationsnummer mit einer Weitverkehrsnetzadresse verknüpft und dass die Weitverkehrsnetzadresse in einen zumindest zweidimensionalen Strichcode codiert wird.

13. System eingerichtet zum Austauschen von Ladeinformationen zwischen einer Ladestation (4) und einem Kassensystem (8) umfassend:
eine Ladestation (4),
eine Zentrale (6),
ein Kassensystem (8),
- wobei die Ladestation (4) nach dem Empfang eines Freigabesignals einen Ladevorgang freigibt,
- dass die Ladestation (4) einen Ladevorgangs durchführt,
- dass die Ladestation (4) nach Abschluss des Ladevorgangs und vor einem Übermitteln eines Energiemengenzählermesswertes umfassend eine Information zu einer an der Ladestation (4) bei dem Ladevorgang bezogenen Energiemenge von der Ladestation (4) an der Zentrale (6) gesperrt ist,
dass die Ladestation (4) den Energiemengenzählermesswert an die Zentrale (6) übermittelt,
dass die Zentrale (6) zumindest den Energiemengenzählermesswert an das Kassensystem (8) übermittelt,
dass das Kassensystem nach dem Empfang des Energiemengenzählermesswerts ein Freigabesignal zur Freigabe eines Ladestroms in der Ladestation (4) erzeugt und das Freigabesignal an die Zentrale (6) übermittelt,
und
dass die Zentrale (6) zumindest das Freigabesignal an die Ladestation (4) übermittelt.

## Claims

1. A method for exchanging charging information between a charging station (4) and a POS system (8) comprising:
- enabling a charging process after receiving an enable signal in the charging station (4),
- carry out a charging process at the charging station (4),
- locking the charging station (4) after completion of a charging process and before transmission of an energy meter reading to control centre (6) comprising information on an energy quantity obtained at the charging station (4) during the charging process from the charging station (4),
Receiving the energy meter reading from the charging station (4) in the control centre (6),
subsequently transmitting at least the energy meter reading from the control centre (6) to a POS system (8),
wherein
after the energy meter reading has been transmitted, an enabling signal for enabling a charging current in the charging station (4) is received by the POS system (8) in the control centre (6), and
at least the release signal is then transmitted from the control centre (6) to the charging station (4).

2. Method according to claim 1, **characterized in that**, in addition to the energy meter reading, information that the charging station locks its charging current is received by the charging station (4) in the control centre (6).

3. Method according to claim 1 or 2, **characterized in that** a charging current locking signal is received by the POS system (8) in the control centre (6) before the energy meter reading is received, and **in that** the charging current locking signal is transmitted from the control centre (6) to the charging station (4).

4. Method according to one of the preceding claims, **characterized in that** the energy meter reading is received at intervals during an ongoing charging process from the charging station (4) in the control centre (6) and **in that** the receiving energy meter reading is transmitted from the control centre (6) to the POS system (8).

5. Method according to one of the preceding claims, **characterized in that**, together with the energy meter reading, information on
- a status of the charging station (4),
- an identification of the charging station (4),
- an identification of the energy meter,
- charing times,
- connection times, and/or
- a signature
is received from the charging station (4) in the control centre (6).

6. Method according to one of the preceding claims, **characterized in that** the charging station (4) monitors a communication link with the control centre (6) and **in that** the charging station (4) enables charging operation with a limited scope in the event of a fault in the communication link.

7. Method according to one of the preceding claims, **characterized in that** the charging station (4) automatically negotiates a charging process with an electric vehicle (14) after receiving the release signal.

8. Method according to one of the claims 5 to 7, **characterized in that** in the POS system (8) at least the received energy meter reading is checked for authenticity using the identification of the charging station (4) and the identification of the energy quantity meter and/or **in that** in the POS system (8) at least the received energy meter reading is checked for integrity using the signature.

9. Method according to one of claims 5 to 8, **characterized in that** at least the received energy meter reading is checked for authenticity in the control centre (6) using the identification of the charging station (4) and the identification of the energy quantity meter and/or **in that** at least the received energy meter reading is checked for integrity in the control centre (6) using the signature.

10. Method according to one of the preceding claims, **characterized in that** a unique charging process identification number is assigned to the energy meter reading in the control centre (6) and **in that** the charging process identification number is transmitted together with the energy meter reading from the control centre (6) to the POS system.

11. Method according to claim 10, **characterized in that** the control centre (6) makes the energy meter reading together with the charging process identification number accessible via a wide area network.

12. Method according to one of the claims 10 or 11, **characterized in that** the control centre (6) links the loading process identification number to a wide area network address and **in that** the wide area network address is coded into an at least two-dimensional bar code.

13. System arranged to exchange charging information between a charging station (4) and a POS system (8) comprising:
one charging station (4),
one central (6),
a POS system (8),
**characterized in that**
- the charging station (4) releases a charging process after receiving an enable signal,
- the charging station (4) carries out a charging process,
- the charging station (4) is locked after completion of the charging process and before transmission of an energy meter reading to the to control centre (6) comprising information on an energy quantity obtained at the charging station (4) during the charging process,
the charging station (4) transmits the measured energy meter reading to the control centre (6),
**in that** the control centre (6) forwards at least the measured energy meter reading to the POS system (8),
the POS system generates a release signal for releasing a charging current in the charging station (4) after the energy meter reading has been received and
transmits the release signal to the control centre (6), and
the control centre (6) forwards at least the release signal to the charging station (4).

## Revendications

1. Procédé d'échange d'informations de charge entre un poste de charge (4) et un système de caisse (8), comprenant :
- le déblocage d'un processus de charge après la réception d'un signal de déblocage au poste de charge (4),
- la réalisation d'un processus de charge au poste de charge (4),
- le blocage du poste de charge (4) après la fin du processus de charge et avant une transmission d'un résultat de mesure de quantité d'énergie comprenant une information sur la quantité d'énergie reçue du poste de charge (4) lors du processus de charge, du poste de charge (4) vers une centrale (6),
la réception du résultat de mesure de quantité d'énergie du poste de charge (4) à la centrale (6), suivie de la transmission d'au moins le résultat de mesure de quantité d'énergie de la centrale (6) à un système de caisse (8), où
après la transmission du résultat de mesure de quantité d'énergie, un signal de déblocage est réceptionné du système de caisse (8) à la centrale (6) pour débloquer un courant de charge dans le poste de charge (4), et
ensuite, le signal de déblocage est au moins transmis de la centrale (6) au poste de charge (4).

2. Procédé selon la revendication 1, **caractérisé en ce que**, outre le résultat de mesure de quantité d'énergie, une information est réceptionnée du poste de charge (4) à la centrale (6), information mentionnant que le poste de charge bloque son courant de charge.

3. Procédé selon la revendication 1 ou 2, **caractérisé en ce qu'**avant la réception du résultat de mesure de quantité d'énergie, un signal de blocage de courant de charge venant du système de caisse (8) est réceptionné à la centrale (6) et **en ce que** le signal de blocage du courant de charge est transmis de la centrale (6) au poste de charge (4).

4. Procédé selon l'une des revendications précédentes, **caractérisé en ce que** le résultat de mesure de quantité d'énergie venant du poste de charge (4) est réceptionné à la centrale (6) à intervalles pendant un processus de charge en cours et **en ce que** le résultat de mesure de quantité d'énergie réceptionné par les centrale (6) est transmis au système de caisse (8) .

5. Procédé selon l'une des revendications précédentes, **caractérisé en ce que**, conjointement au résultat de mesure de quantité d'énergie, des informations concernant
- un statut du poste de charge (4),
- une identification du poste de charge (4),
- une identification de l'appareil de mesure de la quantité d'énergie,
- la durée de charge,
- les durées de connexion, et/ou
- un signature,
Sont réceptionnées à la centrale (6) en provenance du poste de charge (4).

6. Procédé selon l'une des revendications précédentes, **caractérisé en ce que** le poste de charge (4) contrôle une connexion de communication avec la centrale (6) et **en ce que** le poste de charge (4) permet un fonctionnement de charge limité en cas de trouble au niveau de la connexion de communication.

7. Procédé selon l'une des revendications précédentes, **caractérisé en ce que**, après la réception du signal de déblocage, le poste de charge (4) négocie un processus de charge automatique avec un véhicule électrique (14).

8. Procédé selon l'une des revendications 5 à 7, **caractérisé en ce que**, dans le système de caisse (8), l'authenticité du résultat de mesure de quantité d'énergie réceptionné au moins est vérifiée en utilisant l'identification du poste de charge (4) et l'identification de l'appareil de mesure de la quantité d'énergie et/ou **en ce que**, dans le système de caisse (8), l'intégrité du résultat de mesure de quantité d'énergie réceptionné au moins est vérifiée en utilisant la signature.

9. Procédé selon l'une des revendications 5 à 8, **caractérisé en ce que**, dans la centrale (6), l'authenticité du résultat de mesure de quantité d'énergie réceptionné au moins est vérifiée en utilisant l'identification du poste de charge (4) et l'identification de l'appareil de mesure de la quantité d'énergie et/ou **en ce que**, dans la centrale (6), l'intégrité du résultat de mesure de quantité d'énergie réceptionné au moins est vérifiée en utilisant la signature.

10. Procédé selon l'une des revendications précédentes, **caractérisé en ce que**, dans la centrale (6), un numéro d'identification du processus de charge explicite est attribué au résultat de mesure de quantité d'énergie et **en ce que** le numéro d'identification du processus de charge est transmis, conjointement au résultat de mesure de quantité d'énergie, par la centrale (6) au système de caisse.

11. Procédé selon la revendication 10, **caractérisé en ce que** la centrale donne accès au résultat de mesure de quantité d'énergie ainsi qu'au numéro d'identification du processus de charge par un réseau étendu.

12. Procédé selon l'une des revendications 10 ou 11, **caractérisé en ce que** la centrale (6) relie le numéro d'identification du processus de charge à une adresse de réseau étendu et **en ce que** l'adresse de réseau étendu est codé au moins par un code-barres bidimensionnel.

13. Système conçu pour échanger des informations de charge entre un poste de charge (4) et un système de caisse (8), comprenant :
un poste de charge (4),
une centrale (6),
un système de caisse (8),
- où le poste de charge (4) débloque un processus de charge après réception d'un signal de déblocage,
- le poste de charge (4) effectue un processus de charge,
- le poste de charge (4) est bloqué après la fin du processus de charge et avant une transmission d'un résultat de mesure de quantité d'énergie comprenant une information sur la quantité d'énergie reçue du poste de charge (4) lors du processus de charge, du poste de charge (4) vers une centrale (6),
- le poste de charge (4) transmet le résultat de mesure de quantité d'énergie à la centrale (6),
- la centrale (6) transmet au moins le résultat de mesure de quantité d'énergie au système de caisse (8),
- après la réception du résultat de mesure de quantité d'énergie, le système de caisse produit un signal de blocage pour bloquer le courant de charge au poste de charge (4) et transmet le signal de blocage à la centrale (6), et
- la centrale transmet au moins le signal de blocage au poste de charge (4).
